# EUROPEAN PATENT SPECIFICATION

(11) **EP 2 473 706 B1**
(45) Date of publication and mention of the grant of the patent: **03.04.2019**
(21) Application number: 10814115.1
(22) Date of filing: 09.07.2010
(51) Int. Cl.: F01K 13/00, F01K 23/10, F02C 6/18, F23C 9/00, F23J 15/06, F01D 25/30, F02C 3/34

(54) **LOW EMISSION POWER GENERATION AND HYDROCARBON RECOVERY SYSTEMS AND METHODS**
EMISSIONSARME ENERGIEERZEUGUNG SOWIE SYSTEME UND VERFAHREN ZUR RÜCKGEWINNUNG VON KOHLENWASSERSTOFF
SYSTÈMES ET PROCÉDÉS DE GÉNÉRATION D'ÉNERGIE ET DE RÉCUPÉRATION D'HYDROCARBURES À FAIBLES ÉMISSIONS

(30) Priority: 01.09.2009 US 238971 P
(43) Date of publication of application: 11.07.2012
(73) Proprietor: ExxonMobil Upstream Research Company, Spring TX 77389 (US)
(72) Inventor: RASMUSSEN, Chad, Houston TX 77018 (US); HUNTINGTON, Richard A., Oak Hill VA 20171 (US); O'DEA, Dennis, Somerset NJ 08873-6053 (US); MITTRICKER, Franklin F., Jamul CA 91935 (US); HERSHKOWITZ, Frank, Liberty Corners NJ 07938 (US)
(74) Representative: Uexküll & Stolberg
(86) International application number: PCT/US2010/041548
(87) International publication number: WO 2011/028322

(56) References cited:
- WO-A1-03/069132
- WO-A1-2008/091158
- WO-A1-2009/041617
- US-A- 3 500 642
- US-A- 5 595 059
- US-A- 5 715 672
- US-A1- 2004 128 975
- US-A1- 2006 005 542
- US-A1- 2007 044 479
- US-A1- 2007 245 736
- US-A1- 2008 141 643

## Description

### CROSS-REFERENCE TO RELATED APPLICATION

### FIELD OF THE INVENTION

Embodiments of the invention relate to low emission power generation in hydrocarbon recovery processes. More particularly, embodiments of the invention relate to methods and systems for using high turbine discharge temperatures generated by oxyfuel combustion (i) to encourage post-combustor conversion of gaseous components such that a desired chemical state is achieved and (ii) to reform a control fuel stream to generate a reformed control fuel stream characterized by an increase in hydrogen.

### BACKGROUND OF THE INVENTION

This section is intended to introduce various aspects of the art, which may be associated with exemplary embodiments of the present invention. This discussion is believed to assist in providing a framework to facilitate a better understanding of particular aspects of the present invention. Accordingly, it should be understood that this section should be read in this light, and not necessarily as admissions of prior art.

Many enhanced hydrocarbon recovery operations can be classified as one of the following types: pressure maintenance and miscible flooding. In a pressure maintenance operation, inert gasses such as nitrogen are injected into a primarily gaseous reservoir to maintain at least a minimal pressure in the reservoir to prevent retrograde condensation and improve total recovery. In a miscible flooding operation, miscible gasses such as carbon dioxide are injected into a primarily liquidous reservoir to mix with the liquids, lowering their viscosity and increasing pressure to improve the recovery rate.

Many oil producing countries are experiencing strong domestic growth in power demand and have an interest in enhanced oil recovery (EOR) to improve oil recovery from their reservoirs. Two common EOR techniques include nitrogen (N₂) injection for reservoir pressure maintenance and carbon dioxide (CO2) injection for miscible flooding for EOR. At the same time there is a global concern regarding green house gas (GHG) emissions. This concern combined with the implementation of cap-and-trade policies in many countries make reducing CO2 emissions a priority for these and other countries as well as the companies that operate hydrocarbon production systems therein.

Some approaches to lower CO2 emissions include fuel de-carbonization or post-combustion capture. However, both of these solutions are expensive and reduce power generation efficiency, resulting in lower power production, increased fuel demand and increased cost of electricity to meet domestic power demand. Another approach is an oxyfuel gas turbine in a combined cycle (e.g. where exhaust heat from the gas turbine Brayton cycle is captured to make steam and produce additional power in a Rankin cycle). However, the power required to produce high purity oxygen significantly reduces the overall efficiency of the process. Several studies have compared these processes and show some of the advantages of each approach. *See, e.g.* BOLLAND, OLAV, and UNDRUM, HENRIETTE, Removal of CO2 from Gas Turbine Power Plants: Evaluation of pre- and post-combustion methods, SINTEF Group, found at http://www.energy.sintef.no/publ/xergi/98/3/3art-8-engelsk.htm (1998). International Application No. WO 2009/041643 A1 is directed to the expansion of a working fluid consisting essentially of carbon dioxide in a gas turbine. U.S. Patent Application No. 2008/ 0141643 A1 is directed to a system for reducing NOₓ emissions which includes a reformer to produce a hydrogen-enriched stream, a combustion system to combust the hydrogen-enriched stream, and a recuperator to recover heat from the exhaust stream where the recovered heat is recycled to the reformer. International Application No. WO 2008/091158 A1 is directed to a method for enhancing carbon dioxide capture from flue gases produced in a combustor in a power plant based on the use of an open air-cycle and a semi closed oxyfuel cycle that transfers part of the oxygen in the air to a flue gas through an oxygen separation device which is then supplied to the combustor of the power plant.

Nonetheless, there is still a substantial need for a low emission, high efficiency power generation and hydrocarbon recovery process.

### SUMMARY OF THE INVENTION

A low emission, high efficiency power generation and hydrocarbon recovery process is described in PCT Patent Application PCT/US2009/038247 titled "LOW EMISSION POWER GENERATION AND HYDROCARBON RECOVERY SYSTEMS AND METHODS" which claims the benefit of U. S. Provisional Application No. 61/072,292, filed 28 March 2008, and U. S. Provisional Application No. 61/153,508, filed 18 February 2009 The present invention constitutes improvements to the methods and systems of the PCT/US2009/038247 application.

More specifically, one embodiment of the present invention comprises an oxygen stream, a carbon dioxide stream, a control fuel stream, a combustion unit, a turbine, and a plenum. The combustion unit is configured to receive and combust the oxygen stream, the carbon dioxide stream, and the control fuel stream to produce a gaseous combustion stream having substantially carbon dioxide and water. The gaseous combustion stream has a temperature of at least 982 °C (1800 degrees Fahrenheit). The turbine is configured to receive the gaseous combustion stream, expand the gaseous combustion stream, and exhaust the expanded gaseous combustion stream as a turbine discharge stream. The turbine discharge stream has a temperature of at least 694°C (1200 degrees Fahrenheit). The plenum is in fluid communication with the turbine for receiving the turbine discharge stream. The plenum is configured to provide a residence time during at least one individual component of the turbine discharge stream reacts chemically towards equilibrium and substantially converts an intermediate product to an equilibrium product.

The present invention comprises a combustion unit, a turbine, and a steam reformer. The combustion unit is configured to produce a gaseous combustion stream. The turbine is configured to receive the gaseous combustion stream, expand the gaseous combustion stream, and exhaust the expanded gaseous combustion stream as a turbine discharge stream. The turbine discharge stream has a temperature of at least 694°C (1200 degrees Fahrenheit). The steam reformer is configured to receive the turbine discharge stream and the control fuel stream, extract heat from the turbine discharge stream, and transfer the heat into a reformer feed stream to generate a reformer product stream.

Yet another embodiment of the present invention comprises the steps of providing an oxygen stream, a carbon dioxide stream, and a control fuel stream; combusting the oxygen stream, the carbon dioxide stream, and the control fuel stream to produce a gaseous combustion stream; expanding the gaseous combustion stream across a turbine to form an expanded gaseous combustion stream; and providing a residence time for the expanded gaseous combustion stream to reach substantial chemical equilibrium, wherein the residence time is provided by a plenum configured to retain the expanded gaseous combustion stream for the residence time.

Still yet another embodiment of the present invention comprises the steps of providing an oxygen stream, a carbon dioxide stream, a control fuel stream, and a reformed control fuel stream; combusting the oxygen stream, the carbon dioxide stream, and the reformed control fuel stream to produce a gaseous combustion stream; expanding the gaseous combustion stream across a turbine to form an expanded gaseous combustion stream; and reforming the control fuel stream to form the reformed control fuel stream using heat extracted from the expanded gaseous combustion stream. The gaseous combustion stream has a temperature of at least 982°C (1800 degrees Fahrenheit). The reformed control fuel stream is characterized by an increase in hydrogen as compared to the control fuel stream.

### BRIEF DESCRIPTION OF THE DRAWINGS

The foregoing and other advantages of the present invention may become apparent upon reviewing the following detailed description and drawings of non-limiting examples of embodiments in which:
FIG. 1 illustrates an oxyfuel based system for low emission power generation and hydrocarbon recovery that may be implemented in connection with one or more aspects of the present invention;
FIG. 2 illustrates a turbine and heat recovery steam generator configuration that may be implemented in connection with one or more aspects of the present invention;
FIG. 3 illustrates an oxyfuel based system for low emission power generation and hydrocarbon recovery that may be implemented in connection with one or more aspects of the present invention;
FIG. 4 illustrates an oxyfuel based system for low emission power generation and hydrocarbon recovery;
FIG. 5 illustrates an oxyfuel based system for low emission power generation and hydrocarbon recovery;
FIG. 6A illustrates an oxyfuel based system for low emission power generation and hydrocarbon recovery according to the present invention;
FIG. 6B illustrates an oxyfuel based system for low emission power generation and hydrocarbon recovery;
FIG. 7 illustrates a flow diagram of a method for use with an oxyfuel gas turbine system according to an embodiment of the present invention;
FIG. 8 illustrates a flow diagram of a method for use with an oxyfuel gas turbine system according to another embodiment of the present invention; and
FIG. 9 shows equilibrium concentrations (mole fractions) of oxygen in the gaseous combustion stream over a range of pressure, temperature and equivalence ratio.
FIG. 10 shows equilibrium concentrations (mole fractions) of carbon monoxide (CO) in the gaseous combustion stream over a range of pressure, temperature and equivalence ratio.
FIG. 11 shows the oxygen concentrations (mole fraction) of oxygen in the gaseous combustion stream over a range of pressure, temperature and equivalence ratio after a finite residence time of 40 ms.
FIG. 12 illustrates the required residence time for the reaction to progress to within 10% of equilibrium for a range of flame temperatures and equivalence ratios.

### DETAILED DESCRIPTION

### DEFINITIONS

As used herein, the "a" or "an" entity refers to one or more of that entity. As such, the terms "a" (or "an"), "one or more", and "at least one" can be used interchangeably herein unless a limit is specifically stated.

As used herein, the terms "comprising," "comprises," and "comprise" are open-ended transition terms used to transition from a subject recited before the term to one or more elements recited after the term, where the element or elements listed after the transition term are not necessarily the only elements that make up of the subject.

As used herein, the terms "containing," "contains," and "contain" have the same open-ended meaning as "comprising," "comprises," and "comprise."

As used herein, the terms "having," "has," and "have" have the same open-ended meaning as "comprising," "comprises," and "comprise."

As used herein, the terms "including," "includes," and "include" have the same open-ended meaning as "comprising," "comprises," and "comprise."

As used herein, the term "equivalence ratio" refers to the mass ratio of fuel to oxygen entering a combustor divided by the mass ratio of fuel to oxygen when the ratio is stoichiometric.

As used herein, a "stoichiometric" mixture is a mixture having a volume of reactants, which is comprised of fuel and oxidizer, and a volume of products formed by combusting the reactants where the entire volume of the reactants is used to form the products

### DESCRIPTION

In the following detailed description section, specific embodiments of the present invention are described in connection with preferred embodiments. However, to the extent that the following description is specific to a particular embodiment or a particular use of the present invention, this is intended to be for exemplary purposes only and simply provides a description of the exemplary embodiments. Accordingly, the invention is not limited to the specific embodiments described below, but rather by the scope of the appended claims.

A low emission, high efficiency hydrocarbon recovery process is described in PCT Patent Application PCT/US2009/038247 titled "LOW EMISSION POWER GENERATION AND HYDROCARBON RECOVERY SYSTEMS AND METHODS" which claims the benefit of U. S. Provisional Application No. 61/072,292, filed 28 March 2008, and U. S. Provisional Application No. 61/153,508, filed 18 February 2009.

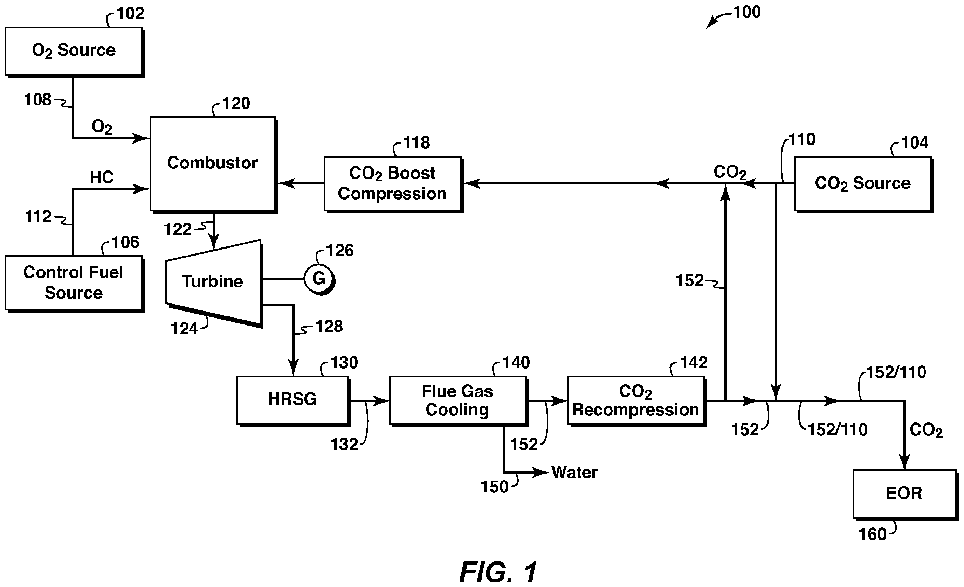

With reference to FIG. 1, an oxyfuel based system **100** for low emission power generation and hydrocarbon recovery that may be implemented in connection with one or more aspects of the present invention is provided. The system **100** generally comprises an oxygen (O2) source **102,** a carbon dioxide (CO2) source **104** and a control fuel source **106** for generating an oxygen stream **108,** a carbon dioxide stream **110** and a control fuel stream **112,** such as a hydrocarbon based fuel stream (HC), respectively. In at least one embodiment the CO2 stream **110** may be compressed (e.g., between 12 and 18 barg) using a compressor such as the boost compressor **118.** In another embodiment the CO2 stream **110** may, due to the characteristics of the CO2 source, already be at pressure. The streams **108, 110,** and **112** are fed to (i.e., received by) a combustion unit **120** and combusted to produce a gaseous combustion stream **122.** In general, the gaseous combustion stream **122** includes carbon dioxide (CO2) and water (H2O) at a pressure between 12 and 18 bar. More specifically, the gaseous combustion stream **122,** in at least one embodiment, may be between 70 and 80 percent CO2. However, the gaseous combustion stream **122** may include any appropriate components at any appropriate concentration(s) and at any appropriate pressure(s) to meet the design criteria of a particular application. Furthermore, the temperature of the gaseous combustion stream **122** is adjusted by the proportion of the CO2 stream 110 applied. For example, in one embodiment, the temperature of the gaseous combustion stream **122** is greater than or equal to 1800 degrees Fahrenheit. In at least one other embodiment the temperature of the gaseous combustion stream **122** is substantially between 1038 and 1482°C (1900 and 2700 degrees Fahrenheit). In yet another embodiment, the temperature of the gaseous combustion stream **122** is substantially between 1204 and 1371°C (2200 and 2500 degrees Fahrenheit). However, the temperature of the gaseous combustion stream **122** may be any appropriate temperature resulting from the design criteria of a particular application.

In general, the gaseous combustion stream **122** is received by a turbine **124** and is expanded across the turbine **124.** In at least one embodiment the turbine **124** is configured such that the expansion of the stream **122** across the turbine **124** generates power, such as electric power generated by an electric generator **126** coupled to the turbine **124.** The expanded stream **122** may then be exhausted as a turbine discharge stream **128.** In at least one embodiment the turbine discharge stream **128** has a pressure substantially equal to 1 bar. In another embodiment, the turbine discharge stream **128** has a pressure substantially between 1 and 2 bars. However, the turbine discharge stream **128** may have any appropriate pressure resulting from the design criteria of a particular application. Similarly, in at least one embodiment, the turbine discharge stream **128** has a temperature substantially between 694 and 982°C (1200 and 1800 degrees Fahrenheit). In at least one other embodiment, the turbine discharge stream **128** has a temperature substantially between 732 and 927°C (1350 and 1700 degrees Fahrenheit). However, the turbine discharge stream **128** may have any appropriate temperature resulting from the design criteria of a particular application.

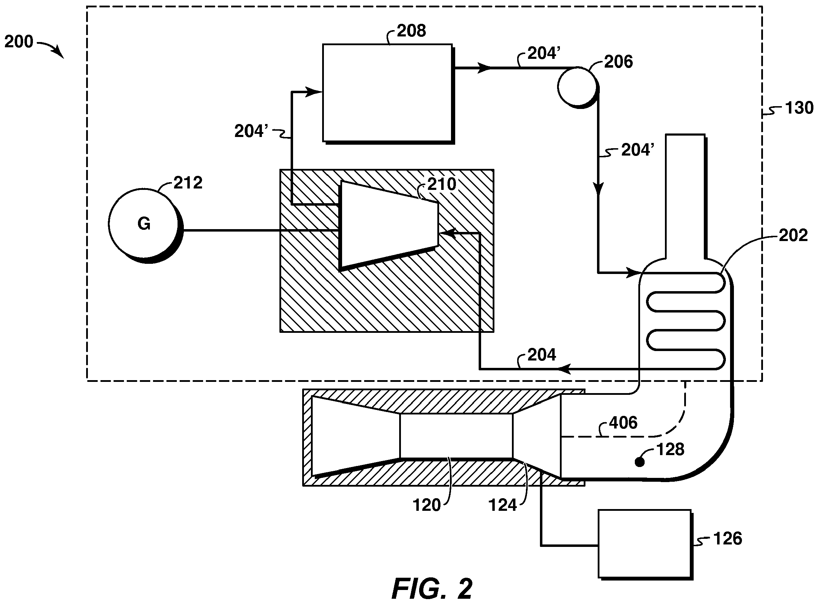

As will be described in subsequent paragraphs, the discharge stream **128** may be implemented in conjunction with one or more additional devices and/or structure to meet the design criteria of a particular application. As shown in FIG. 1, the stream **128** is received by a heat recovery steam generator (HRSG) **130,** described in more detail in connection with FIG. 2, for generating electrical power, sometimes referred to as supplemental power. The HRSG generally exhausts/passes a temperature reduced gaseous exhaust stream **132.**

Various cooling (e.g., **140**) and compression techniques (e.g., **142**) may be applied to the gaseous exhaust stream **132** or components of the gaseous exhaust stream **132** to meet the design criteria of a particular application. For example, flue gas cooling **140** may be implemented to separate water (H2O) **150** from the stream **132** such that the concentration of CO2 in the resulting stream **152** is greater than the concentration of CO2 in stream **132.** All or a portion of the resultant stream **152** may then be compressed (e.g., via compressor **142**) and/or otherwise configured for use in one or more processes such as enhanced oil recovery (EOR) **160.** Similarly, all or a portion (e.g., 70-100%) of the resultant stream **152** (compressed or otherwise) may be recirculated as the CO2 stream **110.**

FIG. 2 illustrates a turbine **124** and heat recovery steam generator **130** configuration **200** that may be implemented in connection with one or more aspects of the present invention. As shown in FIG. 2, the heat recovery steam generator **130** may comprise a heat exchanger (e.g., steam coil) **202** in contact with the turbine discharge stream **128** for generating steam **204.** The steam **204** is expanded across a steam turbine 210 to generate power. The steam turbine discharge stream **204'** is treated further for vapor condensing, water make-up, de-gassing, etc in system **208,** which may be a condenser, and pumped (e.g., via pump **206**) to high pressure before re-entering the heat exchanger **202.** A generator **212** may be coupled to the steam turbine **210** such that the expansion of the steam **204** across the steam turbine **210** generates electrical power.

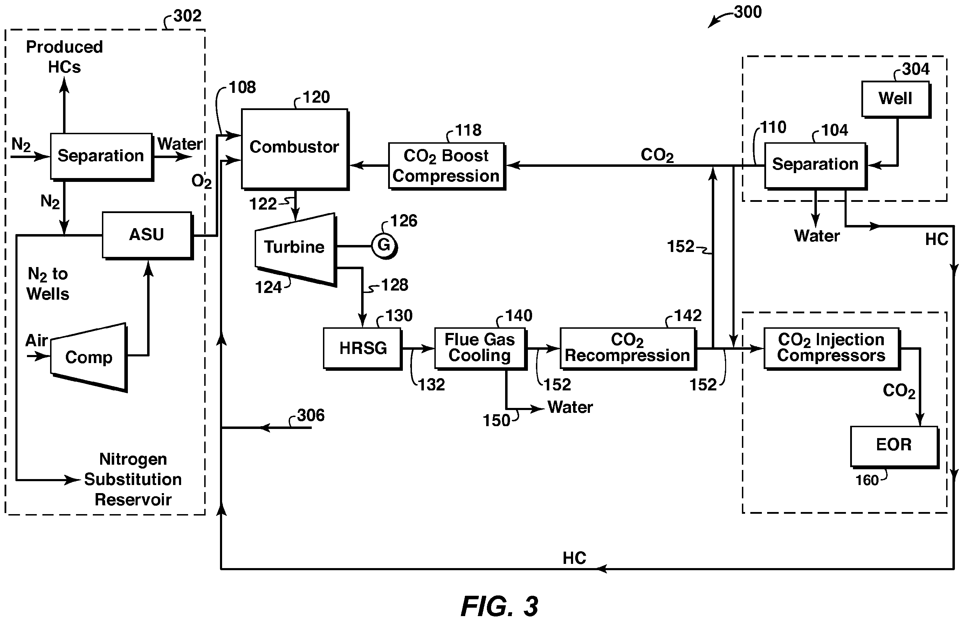

Turning now to FIG. 3, an oxyfuel based system **300** is shown for low emission power generation and hydrocarbon recovery that may be implemented in connection with one or more aspects of the present invention. The system **300** maybe implemented similarly to the system **100** illustrated in connection with FIG. 1 with the addition of exemplary oxygen **102,** carbon dioxide **104** and control fuel **106** sources. More specifically, in the embodiment shown in FIG. 3, an Air Separation Unit (ASU) system **302** is used to generate the oxygen stream **108.** Nitrogen (N2) may also be generated using the ASU and used in one or more complimentary processes such as nitrogen injection for reservoir pressure maintenance.

Similarly, the control fuel stream **112** may be generated from a carbon dioxide flood reservoir (such as an oil well) **304** and/or a hydrocarbon fuel supply line **306.** In at least one embodiment the carbon dioxide stream **110** may also be generated from the oil well **304.** It may be appreciated that the system **300** provides the option to utilize one source (e.g., the stream **152**) for the carbon dioxide stream **110** during system **300** startup and a second source (e.g., reservoir/oil well **304**) during continued system **300** operation or visa-versa.

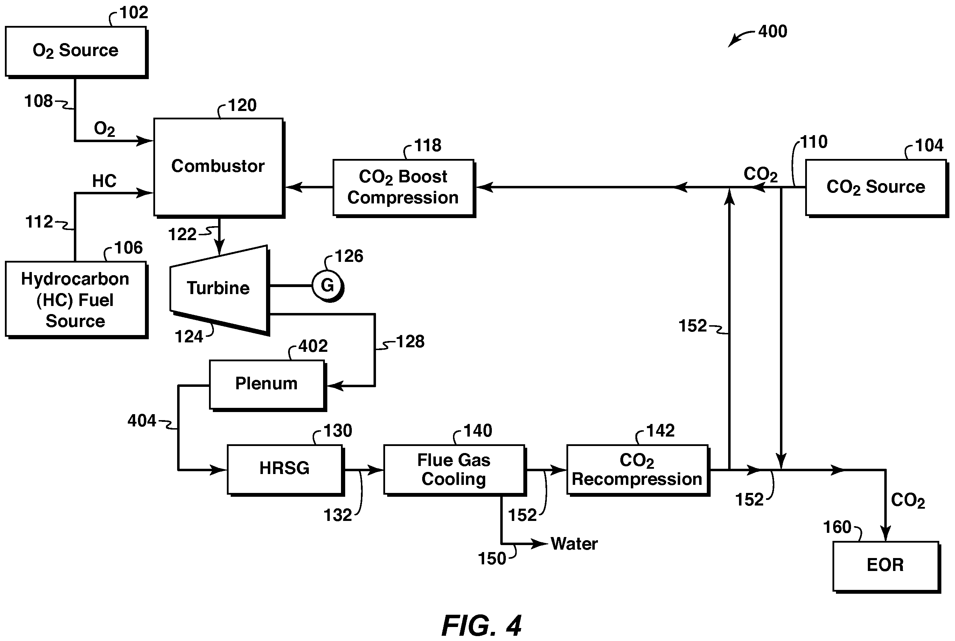

Referring to Figure 4, a diagram illustrating an oxyfuel based system **400** for low emission power generation and hydrocarbon recovery according to an embodiment of the present invention is shown. The system **400** may be implemented similarly to the system **100** and/or the system **300** with the inclusion of a plenum **402.** The plenum **402** is in fluid communication with the turbine **124** and in at least one embodiment may be directly coupled to the turbine **124** for receiving the turbine discharge stream **128.** Similarly the plenum **402** may be in fluid communication with a heat recovery steam generator. The plenum **402** is configured to provide a residence time during which individual components of the turbine discharge stream **128** may continue to react chemically.

In conventional non-oxyfuel high-pressure combustors used in power generating applications, the gases only reside in a combustor for a short period time (e.g., 40 ms) before entering a turbine. Because the reaction rate declines with temperature, the reaction is effectively "frozen" as the gases cool through the turbine's expander. In such a system the reaction is not able to reach equilibrium and the chemistry does not continue at measurable rates downstream in the system. The present invention configures the oxyfuel combustion system temperature, pressure and gas composition to generate a higher temperature turbine discharge stream that is generally still of a sufficient temperature to promote chemical reactions. The plenum **402** claimed in the present invention is designed and implemented to provide a suitable residence time during which individual components of a turbine discharge stream (e.g., **128**) may continue to react until, upon exiting the plenum **402,** the individual components have reached, or substantially reached, a desired reaction state. The resultant plenum exhaust stream **404** may then be utilized in subsequent processes (e.g., EOR) to meet a specified compositional design criteria of a pipeline or other particular application.

In one embodiment, the residence time is predetermined such that at least one individual component of the turbine discharge stream **128** continues to react chemically until the reaction reaches substantial equilibrium (i.e., one or more intermediate product is substantially converted to an equilibrium product). In at least one embodiment, substantial equilibrium may be considered the chemical reaction point at which the concentration of an individual component (e.g., oxygen, carbon monoxide, a hydrocarbon intermediate species, an unburned hydrocarbon intermediate species, formaldehyde, and/or the like) of the turbine discharge stream **128** becomes less than 10% greater than an equilibrium concentration of the individual component.

The residence time maybe predetermined such that at least a predetermined percentage (e.g., 50%, 75%, 90%, etc.) of an individual component (e.g., oxygen, carbon monoxide, a hydrocarbon intermediate species, an unburned hydrocarbon intermediate species, formaldehyde, and/or the like) of the turbine discharge stream **128** at an exit of the turbine **124** is converted to an equilibrium product at an exit of the plenum **402.**

Alternatively, the residence time may be predetermined such that the at least one individual component of the turbine discharge stream **128** reacts chemically until the individual component(s) is suitable for use with an Enhanced Oil Recovery process. In at least one such embodiment, the individual components may include oxygen and carbon monoxide, and the components may be determined to be suitable for use with an Enhanced Oil recovery Process when the oxygen has a concentration equal to or less than 10 parts-per-million and the carbon monoxide has a concentration equal to or less than 1000 parts-per-million.

The present invention includes a plenum **402** that provides a residence time substantially between 0.1 and 10 seconds. In another embodiment, the plenum **402** may provide a residence time substantially between 0.1 and 2 seconds. In yet another embodiment, the plenum **402** may provide a residence time greater than 1 second. However, the plenum **402** may be configured to provide any appropriate residence time to meet the design criteria of a particular application.

It may be understood from the present disclosure that residence time is essentially a function of the velocity of the gas passing through the plenum **402** and the volume of the plenum **402.** As such, the volume of the plenum **402** may be determined to effectuate a desired residence time knowing the density of the turbine discharge stream **128.** The plenum **402** has a constant cross-sectional area and a center line length **406** (illustrated in FIG. 2) substantially between 10 and 30 meters. In yet another embodiment, the plenum **402** has a constant cross-sectional area and a center line length **406** greater than or equal to 30 meters. However, the plenum may have any appropriate volume, shape (including irregular shapes) and/or center line length **406** to meet the design criteria of a particular application.

As such, FIG. 4 represents, *inter alia*, an embodiment **400** of the present invention wherein a plenum (e.g., **402**) is designed and implemented to provide a suitable residence time during which individual components of a turbine discharge stream (e.g., **128**) may continue to react until they have reached (or substantially reached) a desired chemical composition (i.e., reaction state).

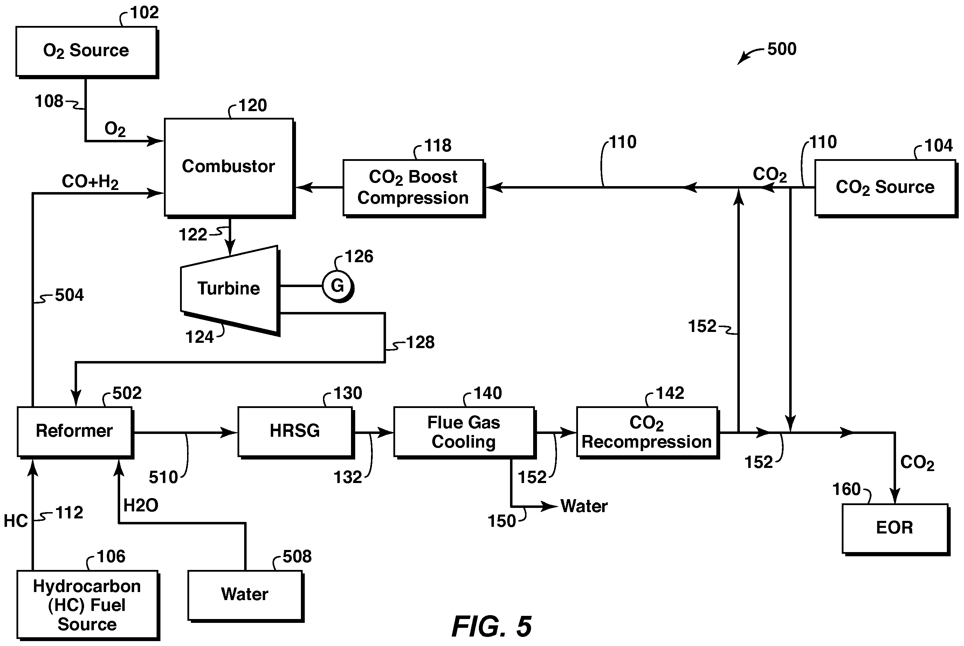

FIG. 5 illustrates another oxyfuel based system **500** which may be implemented similarly to the systems previously discussed (e.g., **100, 300** and **400**). More specifically, the system **500** includes a steam reformer **502** which may, itself, comprise a heat exchanger and a catalyst. The steam reformer **502** may be any suitable type of reformer to meet the design criteria of a particular application; such as a steam reformer or an auto thermal reformer. The steam reformer **502** is configured to receive the turbine discharge stream **128,** at least a portion of the control fuel stream **112,** and a water stream **506** from a water source **508.** In general, inputs to the reformer **502** may be referred to as reformer feed streams and may, in at least one embodiment, include steam and/or carbon dioxide. The heat from the turbine discharge stream **128** drives the endothermic, catalytic steam reforming reaction between the water stream **506** and the control fuel stream **112** (e.g., methane in the control fuel stream **112**) to generate the reformed control fuel stream **504.** In general, outputs of the reformer **502** may be referred to as reformer product streams. In one embodiment, the reformer product stream is further shifted and separated to generate a hydrogen-rich stream and/or a carbon dioxide-rich stream (not shown). The hydrogen-rich stream may be suitable for sale or for piping to a different process.

The reformed control fuel stream **504** is generally characterized by an increase in hydrogen as compared to the control fuel stream **112** and in one embodiment is substantially comprised of hydrogen and carbon monoxide. The reformed control fuel stream **504** is then fed to the combustion unit **120** in place of the control fuel stream **112** of FIG. 1. In at least one embodiment the reformed control fuel stream **504** contains some of the initial hydrocarbon fuel from the fuel control stream **112,** a portion of the hydrogen-rich stream, a portion of the carbon dioxide-rich stream, and/or a combination thereof.

In general the steam reformer **502** is in fluid communication with the turbine **124** and in at least one embodiment the reformer **502** may be directly coupled to the turbine **124.** In addition, one or more embodiments of the present invention may include a steam reformer **502** in fluid communication with and located upstream from a heat recovery steam generator **130.** That is, the heat recovery steam generator **130** may receive the reformer exhaust gas **510.**

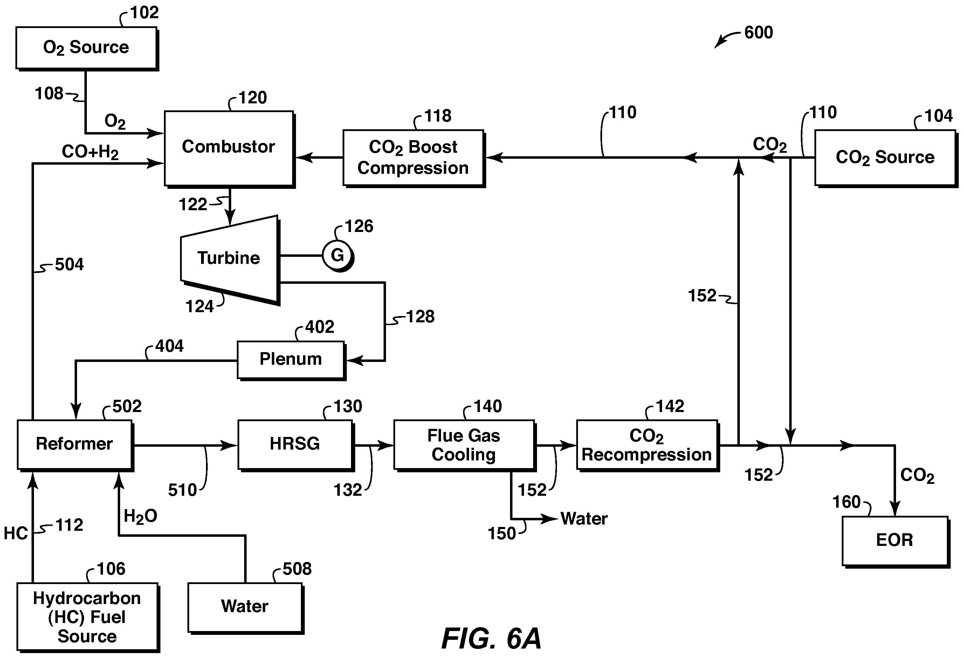

FIG. 6A illustrates an oxyfuel based system **600** according to the invention which may be implemented similarly to the systems previously discussed (e.g., **100, 300, 400** and **500**). More specifically, the system **600** includes a plenum **402** and a steam reformer **502.** As illustrated, the plenum **402** may be in fluid communication with the turbine **124** and may act as previously described in connection with the system **400.** Similarly, the reformer **502,** which may itself comprise a heat exchanger and a catalyst, may be in fluid communication with the plenum **402** and may be configured to use heat from the plenum exhaust stream **404** to reform, for example, methane in the control fuel stream **112** and water in the water stream **506** into hydrogen and carbon monoxide. In one or more embodiments, the reformer exhaust gas **510** may then be fed to a heat recovery steam generator **130,** located down stream from the reformer **502.**

As such, in at least one embodiment the plenum **402,** described in connection with the system **400,** and the steam reformer **502,** described in connection with the system **500,** may be advantageously implemented in a single system (e.g., **600**) to meet the design criteria of a particular application.

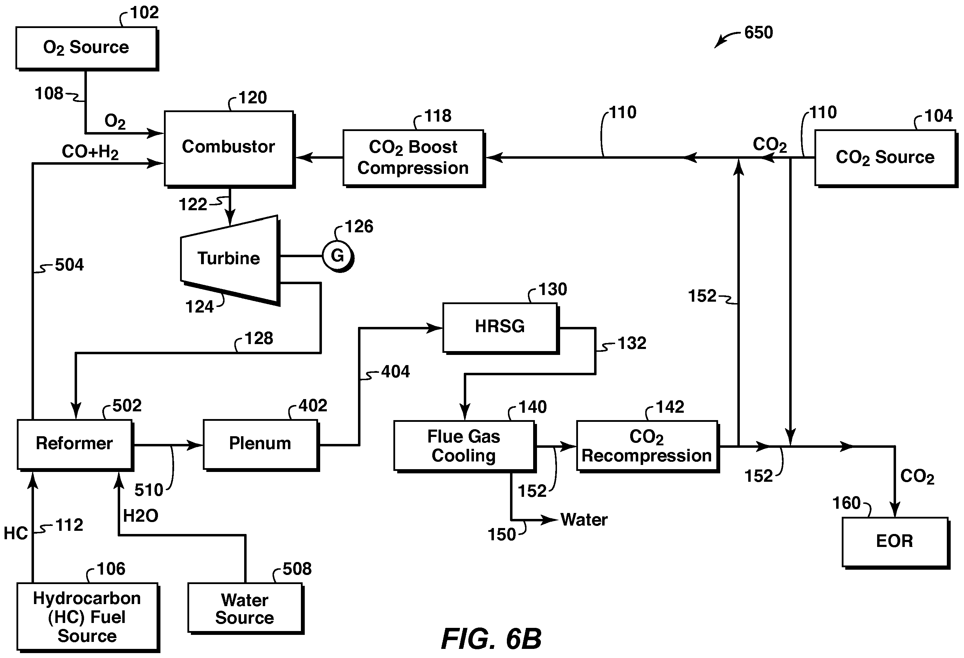

FIG. 6B illustrates yet another oxyfuel based system **650** which may be implemented similarly to the system **600.** More specifically, the system **650** includes a plenum **402** coupled downstream from the steam reformer **502** and a heat recovery steam generator **130** located down stream of the plenum **402.** In such an embodiment the reformer **502** may be in direct fluid communication and/or directly coupled with the turbine **124.** In at least one embodiment, a distance between the reformer **502** and a discharge nozzle (not shown) of the turbin **124** is less than 5 meters. Similarly, the residence time between the reformer **502** and the discharge nozzle on the turbine **124** may be less than 0.1 second. However, any appropriate distance and/or any appropriate residence time may be implemented in the system **650** to meet the design criteria of a particular application.

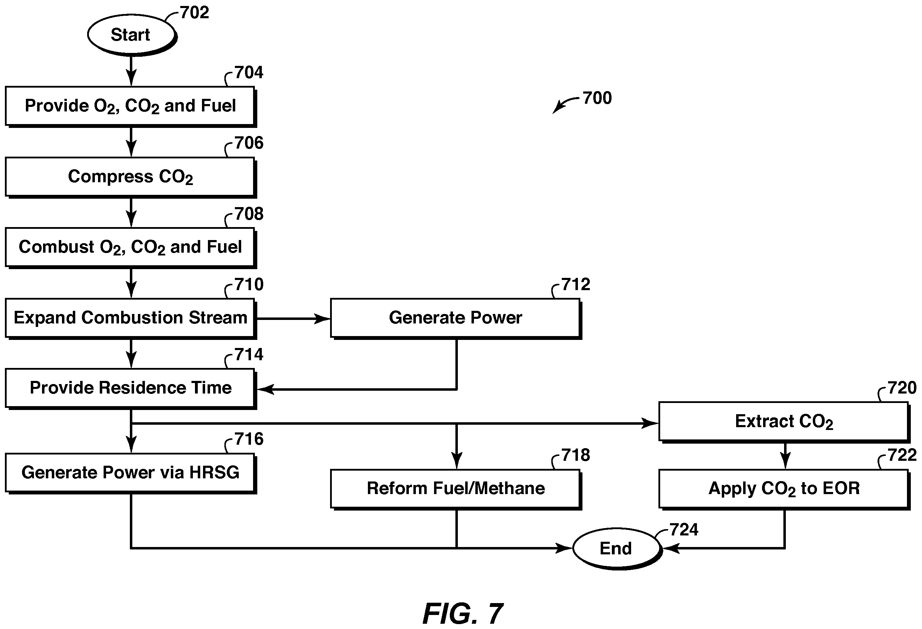

Turning now to FIG. 7, a flow diagram is provided of a method **700** for use with an oxyfuel gas turbine system according to an embodiment of the present invention. The method **700** may be advantageously implemented in connection with the systems **100, 300, 400, 500, 600** and/or **650** described previously in connection with FIGs 1, 3, 4, 5 and 6A (respectively), and/or any appropriate system to meet the design criteria of a particular application. The method **700** generally includes a plurality of blocks or steps (e.g., **702, 704, 706,** and the like) that may be performed serially. As will be appreciated by one of ordinary skill in the art, the order of the steps shown in Figure 7 is exemplary and the order of one or more steps may be modified. Additionally, the steps of the method **700** may be performed in at least one non-serial (or non-sequential) order, and one or more steps may be omitted to meet the design criteria of a particular application. Block **702** represents an entry point into the method **700.**

Block **704** represents the step of providing an oxygen stream (e.g., **108**), a carbon dioxide stream (e.g., **110**), and a control fuel stream (e.g., **112**).

Block **706** represents an optional step of compressing the carbon dioxide (CO2). In at least one embodiment, CO2 may be compressed to between 12 and 18 barg. However, the CO2 may be compressed to any appropriate pressure to meet the design criteria of a particular application. In at least one embodiment, the pressure of the CO2 at the combustor (e.g., **120**) may be substantially similar to the pressure of the CO2 at the source (e.g., **104**). In such an embodiment, post source compression may be unnecessary.

Block **708** represents the step of combusting the oxygen stream, the carbon dioxide stream, and the control fuel stream to produce a gaseous combustion stream (e.g., **122**). In general, the gaseous combustion stream includes CO2 and water at a pressure between 12 and 18 bar. More specifically, the gaseous combustion stream may be between 70 and 80 percent CO2. However, the gaseous combustion stream may include any appropriate components at any appropriate concentration(s) and at any appropriate pressure(s) to meet the design criteria of a particular application. In one embodiment, the temperature of the gaseous combustion stream is greater than or equal to 1800 degrees Fahrenheit. In another embodiment the temperature of the gaseous combustion stream is substantially between 1038 and 1482°C (1900 and 2700 degrees Fahrenheit). In yet another embodiment, the temperature of the gaseous combustion stream is substantially between 1204 and 1371°C (2200 and 2500 degrees Fahrenheit). However, the temperature of the gaseous combustion stream may be any appropriate temperature to meet the design criteria of a particular application.

Block **710** represents the step of expanding the gaseous combustion stream across a turbine (e.g., **124**) to form an expanded gaseous combustion stream (e.g., turbine discharge stream **128**). The temperature of the expanded gaseous combustion stream is higher than the exhaust temperature of a similar non-oxyfuel gas turbine system. In at least one embodiment, the expanded gaseous combustion stream has a temperature substantially between 694 and 982°C (1200 and 1800 degrees Fahrenheit). In at least one other embodiment, the expanded gaseous combustion stream has a temperature substantially between 732 and 927°C (1350 and 1700 degrees Fahrenheit). However, the expanded gaseous turbine stream may be of any appropriate temperature resulting from the design criteria of a particular application.

Block **712** represents the optional step of generating power from the expansion of the gaseous stream across the turbine (i.e., Block **710**).

Block **714** represents the step of providing a residence time for the expanded gaseous combustion stream to reach a desired chemical state, such as substantial chemical equilibrium. In at least one embodiment, the residence time is provided by a plenum (e.g., **402**) configured to retain the expanded gaseous combustion stream for the residence time. As discussed in connection with FIG. 4, the plenum may be configured to retain the expanded gaseous combustion stream for any appropriate residence time such that a desired chemical state (e.g., equilibrium, substantial equilibrium, composition suitable for an Enhanced Oil Recovery process, etc.) is achieved. For example, in at least one embodiment, the plenum may have a center line length substantially between 10 and 30 meters. In another embodiment, the plenum may have a center line length greater than or equal to 30 meters. Similarly, the residence time in one embodiment may be substantially between 0.10 and 10 seconds. In another embodiment the residence time may be substantially between 0.10 and 2 seconds. In yet another embodiment the residence time may be greater than or equal to 1 second. From Block **714** the method **700** may then fall through to any number (or none) of optional steps such as one or more of Blocks **716, 718, 720** and/or **722.**

Block **716** represents the optional step of generating power, using a heat recovery steam generator (e.g., **130**), from the expanded gaseous combustion stream after the step of providing a residence time (i.e., Block **714**).

Block **718** represents the optional step of reforming the control fuel stream (e.g., methane) using heat extracted from the expanded gaseous combustion stream into, for example, Hydrogen and Carbon Monoxide.

Last, blocks **720** and **722** represent the optional steps of extracting carbon dioxide (e.g., from the gaseous combustion stream); and applying the carbon dioxide in an Enhanced Oil Recovery process, respectively.

Block **724** represents and exit from the method **700.**

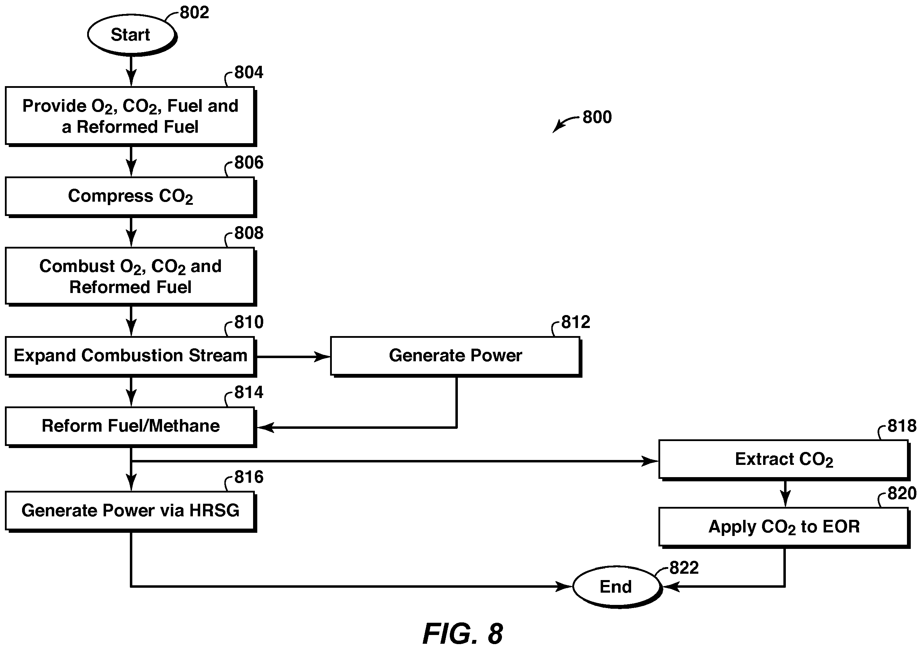

At FIG. 8, a flow diagram is provided of a method **800** for use with an oxyfuel gas turbine system according to another embodiment of the present invention. The method **800** may be advantageously implemented in connection with the systems **100, 300, 400, 500, 600** and/or **650** described previously in connection with FIGs 1, 3, 4, 5 and 6A (respectively), and/or any appropriate system to meet the design criteria of a particular application. The method **800** generally includes a plurality of blocks or steps (e.g., **802, 804, 806,** and the like) that may be performed serially. As will be appreciated by one of ordinary skill in the art, the order of the steps shown in Figure 8 is exemplary and the order of one or more steps may be modified. Additionally, the steps of the method **800** may be performed in at least one non-serial (or non-sequential) order, and one or more steps may be omitted to meet the design criteria of a particular application. Block **802** represents an entry point into the method **800.**

Block **804** represents the step of providing an oxygen stream (e.g., **108**), a carbon dioxide stream (e.g., **110**), a control fuel stream (e.g., **112**), and a reformed control stream (e.g., 50**4**).

Block **806** represents an optional step of compressing the carbon dioxide (CO2). In at least one embodiment, CO2 may be compressed to between 12 and 18 barg. However, the CO2 may be compressed to any appropriate pressure to meet the design criteria of a particular application. In at least one embodiment, the pressure of the CO2 at the combustor (e.g., **120**) may be substantially similar to the pressure of the CO2 at the source (e.g., 10**4**). In such an embodiment, post source compression may be unnecessary.

Block **808** represents the step of combusting the oxygen stream, the carbon dioxide stream, and the reformed control fuel stream to produce a gaseous combustion stream (e.g., **122**). In general, the gaseous combustion stream includes CO2 and water (H2O) at a pressure between 12 and 18 bar. More specifically, the gaseous combustion stream may be between 70 and 80 percent CO2. However, the gaseous combustion stream may include any appropriate components at any appropriate concentration(s) and at any appropriate pressure(s) to meet the design criteria of a particular application. In one embodiment, the temperature of the gaseous combustion stream is greater than or equal to 1800 degrees Fahrenheit. In at least one other embodiment the temperature of the gaseous combustion stream is substantially between 1038 and 1482°C (1900 and 2700 degrees Fahrenheit). In yet another embodiment, the temperature of the gaseous combustion stream is substantially between 1204 and 1371°C (2200 and 2500 degrees Fahrenheit). However, the temperature of the gaseous combustion stream may be any appropriate temperature to meet the design criteria of a particular application.

Block **810** represents the step of expanding the gaseous combustion stream across a turbine (e.g., **124**) to form an expanded gaseous combustion stream (e.g., turbine discharge stream **128**). The temperature of the expanded gaseous combustion stream is higher than the exhaust temperature of a similar non-oxyfuel gas turbine system. In at least one embodiment, the expanded gaseous combustion stream has a temperature substantially between 694 and 982°C (1200 and 1800 degrees Fahrenheit). In at least one other embodiment, the expanded gaseous combustion stream has a temperature substantially between 732 and 927°C (1350 and 1700 degrees Fahrenheit). However, the expanded gaseous turbine stream may be of any appropriate temperature resulting from the design criteria of a particular application.

Block **812** represents the optional step of generating power from the expansion of the gaseous stream across the turbine (i.e., Block **810**).

Block **814** represents the step of reforming the control fuel stream, using heat extracted from the expanded gaseous combustion stream, to form the reformed control fuel stream. In general, the reformed control fuel stream may be characterized by an increase in hydrogen as compared to the control fuel stream. From Block **814** the method **800** may fall through to any number (or none) of optional steps such as one or more of Blocks **816, 818,** and/or **820.**

Block 816 represents the optional step of generating power, using a Heat recovery steam generator (e.g., **130**), from the expanded gaseous combustion stream after the step of reforming (i.e., Block **814**).

Blocks **818** and **820** represent the optional steps of extracting carbon dioxide (e.g., from the gaseous combustion stream); and applying the carbon dioxide in an Enhanced Oil Recovery process, respectively.

Block **822** represents and exit from the method **800.**

### SIMULATIONS

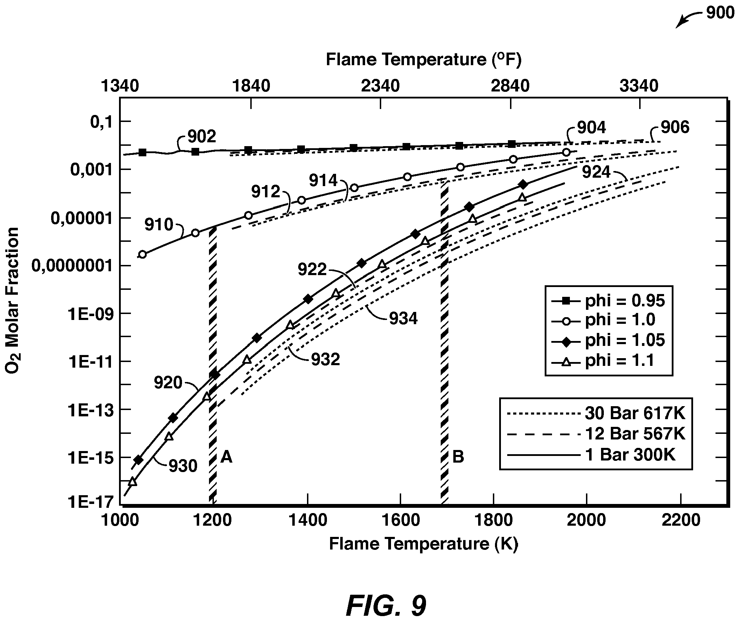

Turning now to FIGs. 9, 10, 11 and 12, a number of graphs representing simulation results are provided. It should be appreciated that the information embodied in these figures and the corresponding text which follows is offered to provide additional insight into, but not to limit, the present invention.

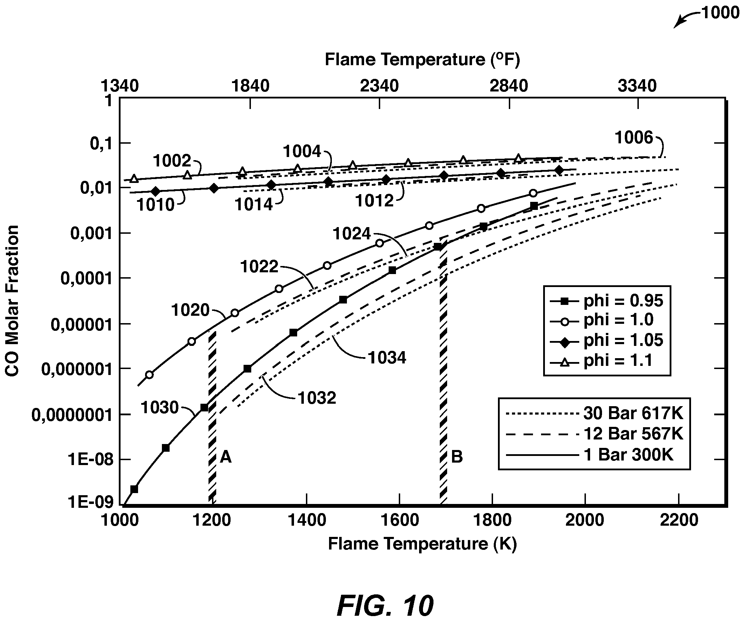

Taken together, Figures 9 and 10 illustrate equilibrium molar fractions of O2 and CO, respectively, for O2/methane combustion in a CO2 stream at a range of flame temperatures, pressures (i.e., 1 bar represented by the solid lines, 12 bars represented by the dashed lines, and 30 bars represented by the dotted lines), and equivalence ratios (i.e., methane to O2 ratios of 0.95, 1, 1.05 and 1.1). In a general sense, equilibrium composition refers to the state where the concentration of all species are constant over time. The composition of a mixture at equilibrium is dependent upon the temperature, pressure and composition of the reactants. In the case of an oxyfuel combustor where the CO2 stream will be used for EOR or transported in a pipeline, it is desirable to have the smallest concentrations of O2 and CO possible. The graphs of Figures 9 and 10 illustrate the equilibrium, and therefore lowest possible, O2 and CO concentrations when the reactions can progress to an equilibrium state.

With regard to the graph **900** of FIG. 9, plot **902** represents an equivalence ratio of 0.95 at 1 bar of pressure, **904** represents an equivalence ratio of 0.95 at 12 bars of pressure, and **906** represents an equivalence ratio of 0.95 at 30 bars of pressure. Similarly, plot **910** represents an equivalence ratio of 1 at 1 bar of pressure, **912** represents an equivalence ratio of 1 at 12 bars of pressure, and **914** represents an equivalence ratio of 1 at 30 bars of pressure. Plot **920** represents an equivalence ratio of 1.05 at 1 bar of pressure, **922** represents an equivalence ratio of 1.05 at 12 bars of pressure, and **924** represents an equivalence ratio of 1.05 at 30 bars of pressure. Last, plot **930** represents an equivalence ratio of 1.1 at 1 bar of pressure, **932** represents an equivalence ratio of 1.1 at 12 bars of pressure, and **934** represents an equivalence ratio of 1.1 at 30 bars of pressure.

With regard to graph **1000** of FIG. 10, plot **1002** represents an equivalence ratio of 1.1 at 1 bar of pressure, **1004** represents an equivalence ratio of 1.1 at 12 bars of pressure, and **1006** represents an equivalence ratio of 1.1 at 30 bars of pressure. Similarly, plot **1010** represents an equivalence ratio of 1.05 at 1 bar of pressure, **1012** represents an equivalence ratio of 1.05 at 12 bars of pressure, and **1014** represents an equivalence ratio of 1.05 at 30 bars of pressure. Plot **1020** represents an equivalence ratio of 1 at 1 bar of pressure, **1022** represents an equivalence ratio of 1 at 12 bars of pressure, and **1024** represents an equivalence ratio of 1 at 30 bars of pressure. Last, plot **1030** represents an equivalence ratio of 0.95 at 1 bar of pressure, **1032** represents an equivalence ratio of 0.95 at 12 bars of pressure, and **1034** represents an equivalence ratio of 0.95 at 30 bars of pressure.

As previously mentioned, a complicating factor with conventional high-pressure combustors used in power generating devices, such as gas turbines, is that the gaseous combustion stream only resides in the combustor for a relatively short time, on the order of 40 ms, before entering the turbine. As a result, the composition is "frozen" because the reaction is quenched as the gas cools through the turbine's expander. There is not enough energy (e.g. low temperature) to allow reactions to progress toward equilibrium at a measurable rate.

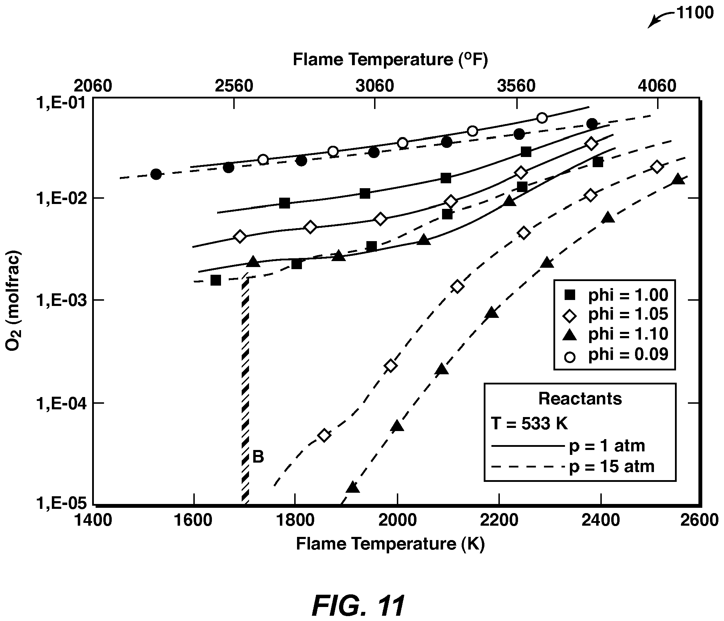

FIG. 11 illustrates the magnitude of the difference between the frozen O2 concentration and the equilibrium concentration. Figure 11 indicates that at 1700 K and an equivalence ratio of 1 at 1 atm, the O2 mole fraction is frozen at approximately 0.008. In comparison, the equilibrium O2 mole fraction for the same conditions in FIG. 9 is approximately 8 times lower at 0.001.

In the proposed configuration of the oxyfuel gas turbine the temperature, pressure and reactant composition are configured to produce a turbine discharge stream with a temperature that is high enough to drive continued reaction toward equilibrium over a calculated residence time. For example, a potential turbine inlet temperature of 1750 K (2690 F) is marked by the line labeled "B" on graph **900, 1000** and **1100.** Line "B" indicates an O2 equilibrium level of the order of 300-500 ppm; however, Line B of graph **1100** indicates that the realistic O2 concentration after 40 ms are up to an order of magnitude higher than the equilibrium levels shown at corresponding Line B of graph **900.** It may be noted that the O2 level at Line B of graph **1100** is greater than one thousand ppm (12 bar, phi=1.0). Such a concentration of O2 is generally unacceptably high for pipeline (i.e., down hole) applications. After expansion across the turbine, the turbine discharge temperature is expected to be on the order or 1200 K. If a plenum is built into the system that allows the chemistry to progress toward equilibrium, the O2 mole fraction, as indicated by line "A" in 1000, will be less than 0.00001 (10 ppm).

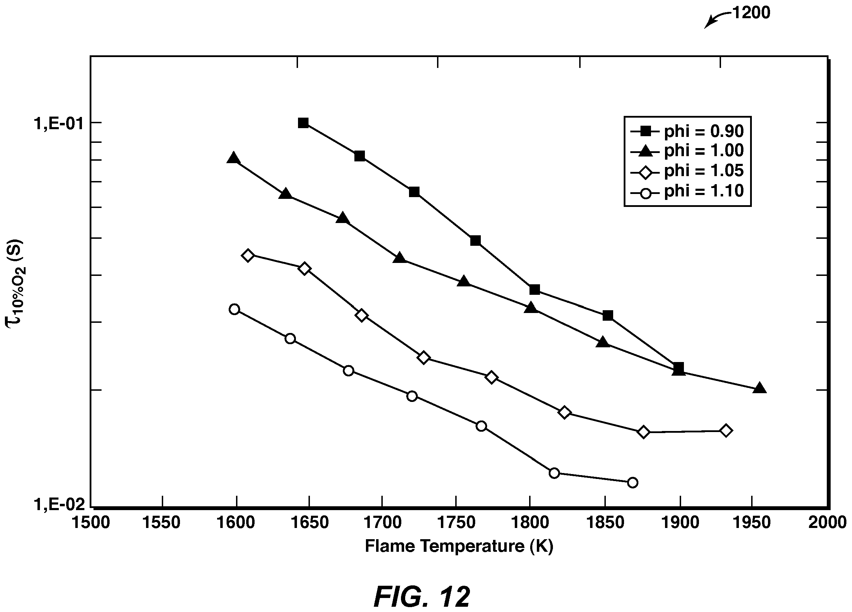

Graph **1200** of FIG. 12 illustrates that longer residence times may provide lower O2 concentrations. Graph **1200** plots the time required (τ10%) for the O2 to reduce from its peak level in the flame to 10% of that peak level. For example, at a turbine discharge temperature of 1200 K as, noted by Line A of graph **900,** the residence time requirement may exceed 1 second.

## Claims

1. An oxyfuel gas turbine system comprising:
an oxygen stream (108);
a carbon dioxide stream (110);
a control fuel stream (112);
a combustion unit (120) configured to receive the oxygen stream, the carbon dioxide stream, and a reformed control fuel stream (504), and combust the reformed control fuel stream, the carbon dioxide stream, and the oxygen stream to produce a gaseous combustion stream (122) having substantially carbon dioxide and water, wherein the gaseous combustion stream has a temperature of at least 982°C (1800 °F);
a turbine (124) configured to receive the gaseous combustion stream, expand the gaseous combustion stream, and exhaust the expanded gaseous combustion stream as a turbine discharge stream (128), wherein the turbine discharge stream has a temperature of at least 649°C (1200 °F);
a plenum (402) in fluid communication with the turbine for receiving the turbine discharge stream, wherein the plenum has a center line length (406) between 10 and 30 meters or greater than 30 meters and provide a residence time between 0.1 and 10 seconds during which at least 50% of one individual component of the turbine discharge stream reacts chemically towards equilibrium and is converted to an equilibrium product in a plenum exhaust stream (404) at an exit of the plenum; and
a steam reformer (502) in fluid communication with the plenum and configured to use heat from the plenum exhaust stream to reform water and methane in the control fuel stream into the reformed control fuel comprising hydrogen and carbon monoxide.

2. The system of claim 1, wherein the turbine is configured to generate power when the gaseous combustion stream is expanded.

3. The system of claim 1, wherein at least a portion of the carbon dioxide from the gaseous combustion stream is used for Enhanced Oil Recovery.

4. The system of claim 1, wherein the individual component of the turbine discharge stream reacts chemically until at least 75% of the individual component is converted to the equilibrium product at an exit of the plenum.

5. The system of claim 4, wherein the individual component is oxygen, carbon monoxide, or a hydrocarbon intermediate species.

6. The system of claim 5, wherein the hydrocarbon intermediate species is an unburned hydrocarbon such as formaldehyde.

7. The system of any one of claims 1 to 6, wherein the the individual component of the turbine discharge stream reacts chemically until at least 90% of the individual component is converted to an equilibrium product at the exit of the plenum.

8. The system of claim 1, wherein the individual component of the turbine discharge stream reacts chemically until the individual component is suitable for use with an Enhanced Oil Recovery process and the individual component is oxygen and the oxygen has a concentration equal to or less than 10 parts-per-million or the individual component is carbon monoxide and the carbon monoxide has a concentration equal to or less than 1000 parts-per-million.

9. The system of claim 1, wherein the pressure of the gaseous combustion stream is substantially between 12 and 18 bar prior to being acted upon by the turbine.

10. The system of claim 1, wherein the temperature of the gaseous combustion stream is substantially between 1038 and 1482 °C (1900 and 2700 °F), preferably between 1204 and 1371°C (2200 and 2500°F).

11. The system of claim 1, wherein the gaseous combustion stream is substantially between 70 and 80 percent carbon dioxide.

12. The system of claim 1, wherein the pressure of the turbine discharge stream is substantially between 1 and 2 bar.

13. The system of claim 1, wherein the temperature of the turbine discharge stream is between 649 and 982°C (1200 and 1800 °F), preferably between 732 and 927°C (1350 and 1700°F).

14. The system of claim 1, wherein the carbon dioxide stream is compressed in one or more compressors (118) prior to being received by the combustion unit.

15. The system of claim 1, wherein the plenum is in fluid communication with a heat recovery steam generator (130) configured to generate power.

16. The system of claim 1, wherein the plenum is directly coupled to the turbine.

17. The system of claim 1, wherein the oxygen stream is generated using an Air Separation Unit (302).

18. The system of claim 1, wherein the control fuel stream is generated from at least one of a carbon dioxide flood reservoir (304), an oil well and a hydrocarbon fuel supply pipeline (306).

19. The system of claim 1, wherein the carbon dioxide stream comprises between 70 and 100 percent of the carbon dioxide from the gaseous combustion stream.

20. The system of claim 1, wherein the carbon dioxide stream is generated primarily from a first source during startup of the oxyfuel gas turbine system and the carbon dioxide stream is generated primarily from a second source during continued operation of the oxyfuel gas turbine system.

21. The system of claim 20, wherein the first source is an oil well and the second source is the gaseous combustion stream.

22. The system of claim 1, wherein the steam reformer is in fluid communication with and located upstream from a heat recovery steam generator (130).

23. An method for use with an oxyfuel gas turbine system, the method comprising:
reforming a control fuel stream (112) to form a reformed control fuel stream (504) using heat extracted from a plenum exhaust stream (404) to reform water and methane in the control fuel stream into the reformed control fuel comprising hydrogen and carbon monoxide;
providing an oxygen stream (108), a carbon dioxide stream (110), and the reformed control fuel stream;
combusting the oxygen stream, the carbon dioxide stream, and the reformed control fuel stream to produce a gaseous combustion stream (122) having substantially carbon dioxide and water, wherein the gaseous combustion stream has a temperature of at least 982 °C (1800 °F);
expanding the gaseous combustion stream across a turbine (124) to form an expanded gaseous combustion stream; and
providing a residence time in a plenum (402) between 0.1 and 10 seconds for the expanded gaseous combustion stream during which at least 50 % of one individual component of the expanded gaseous combustion stream reacts chemically towards chemical equilibrium and is converted to an equilibrium product in the plenum exhaust stream at an exit of the plenum, wherein the plenum has a center line length (406) between 10 and 30 meters or greater than 30 meters.

24. The method of claim 23, further comprising the step of generating power from the step of expanding the gaseous combustion stream across a turbine.

25. The method of claim 23, further comprising the steps of:
extracting carbon dioxide from the gaseous combustion stream; and
applying the carbon dioxide in an Enhanced Oil Recovery process.

26. The method of claim 23, further comprising the step of compressing the carbon dioxide stream prior to the combusting step.

27. The method of claim 23, further comprising the step of generating power, using a Heat recovery steam generator (130), from the expanded gaseous combustion stream after the step of providing a residence time.

## Patentansprüche

1. Oxyfuel-Gasturbinensystem, das
einen Sauerstoffstrom (108);
einen Kohlendioxidstrom (110);
einen Steuerbrennstoffstrom (112);
eine Verbrennungseinheit (120), die ausgestaltet ist, um den Sauerstoffstrom, den Kohlendioxidstrom und einen reformierten Steuerbrennstoffstrom (504) zu empfangen und den reformierten Steuerbrennstoffstrom, den Kohlendioxidstrom und den Sauerstoffstrom zu verbrennen, um einen gasförmigen Verbrennungsstrom (122) zu produzieren, der im Wesentlichen Kohlendioxid und Wasser aufweist, wobei der gasförmige Verbrennungsstrom eine Temperatur von mindestens 982°C (1800°F) hat;
eine Turbine (124), die ausgestaltet ist, um den gasförmigen Verbrennungsstrom zu empfangen, den gasförmigen Verbrennungsstrom zu expandieren und den expandierten gasförmigen Verbrennungsstrom als Turbinenaustragsstrom (128) abzuführen, wobei der Turbinenaustragsstrom eine Temperatur von mindestens 649°C (1200°F) hat;
einen Sammelraum (402) in Fluidverbindung mit der Turbine, um den Turbinenaustragsstrom zu empfangen, wobei der Sammelraum eine Mittellinienlänge (406) zwischen 10 und 30 Metern oder von mehr als 30 Metern hat und eine Verweilzeit zwischen 0,1 und 10 Sekunden bereitstellt, während der mindestens 50 % von einer einzelnen Komponente des Turbinenaustragsstroms chemisch in Richtung des Gleichgewichts reagiert und in einem Sammelabführstrom (404) am Ausgang des Sammelraums in ein Gleichgewichtsprodukt umgewandelt wird; und
einen Dampfreformierer (502) in Fluidverbindung mit dem Sammelraum umfasst, und der ausgestaltet ist, um Wärme aus dem Sammelraumabführstrom zu verwenden, um Wasser und Methan in dem Steuerbrennstoffstrom zu dem reformierten Steuerbrennstoff zu reformieren, der Wasserstoff und Kohlenmonoxid umfasst.

2. System nach Anspruch 1, bei dem die Turbine ausgestaltet ist, um Energie zu generieren, wenn der gasförmige Verbrennungsstrom expandiert wird.

3. System nach Anspruch 1, bei dem mindestens ein Anteil des Kohlendioxids aus dem gasförmigen Verbrennungsstrom für tertiäre Ölgewinnung (EOR) verwendet wird.

4. System nach Anspruch 1, bei dem die einzelne Komponente des Turbinenaustragsstroms chemisch reagiert, bis mindestens 75 % der einzelnen Komponente am Ausgang des Sammelraums in das Gleichgewichtsprodukt umgewandelt worden sind.

5. System nach Anspruch 4, bei dem die einzelne Komponente Sauerstoff, Kohlenmonoxid oder eine Kohlenwasserstoffzwischenproduktspezies ist.

6. System nach Anspruch 5, bei dem die Kohlenwasserstoffzwischenproduktspezies ein unverbrannter Kohlenwasserstoff ist, wie Formaldehyd.

7. System nach einem der Ansprüche 1 bis 6, bei dem die einzelne Komponente des Turbinenaustragsstroms chemisch reagiert, bis mindestens 90 % der einzelnen Komponente am Ausgang des Sammelraums in ein Gleichgewichtsprodukt umgewandelt worden sind.

8. System nach Anspruch 1, bei dem die einzelne Komponente des Turbinenaustragsstroms chemisch reagiert, bis die einzelne Komponente zur Verwendung mit einem tertiären Ölgewinnungsprozess geeignet ist, und die einzelne Komponente Sauerstoff ist, und der Sauerstoff eine Konzentration gleich oder kleiner als 10 ppm hat, oder die einzelne Komponente Kohlenmonoxid ist, und das Kohlenmonoxid eine Konzentration gleich oder kleiner als 1000 ppm hat.

9. System nach Anspruch 1, bei dem der Druck des gasförmigen Verbrennungsstroms im Wesentlichen zwischen 12 und 18 bar liegt, bevor die Turbine darauf einwirkt.

10. System nach Anspruch 1, bei dem die Temperatur des gasförmigen Verbrennungsstroms im Wesentlichen zwischen 1038 und 1482°C (1900 bis 2700°F), vorzugsweise zwischen 1204 und 1371°C (2200 und 2500°F) liegt.

11. System nach Anspruch 1, bei dem der gasförmige Verbrennungsstrom im Wesentlichen zwischen 70 und 80 Prozent Kohlendioxid ist.

12. System nach Anspruch 1, bei dem der Druck des Turbinenaustragsstroms im Wesentlichen zwischen 1 und 2 bar liegt.

13. System nach Anspruch 1, bei dem die Temperatur des Turbinenaustragsstroms zwischen 649 und 982°C (1200 bis 1800°F), vorzugsweise zwischen 732 und 927°C (1350 und 1700°F) liegt.

14. System nach Anspruch 1, bei dem der Kohlendioxidstrom in einem oder mehreren Kompressoren (118) komprimiert wird, bevor er in der Verbrennungseinheit empfangen wird.

15. System nach Anspruch 1, bei dem der Sammelraum in Fluidverbindung mit einem Dampfgenerator (130) zur Wärmerückgewinnung ist, der ausgestaltet ist, um Energie zu generieren.

16. System nach Anspruch 1, bei dem der Sammelraum direkt an die Turbine gekoppelt ist.

17. System nach Anspruch 1, bei dem der Sauerstoffstrom unter Verwendung einer Luftzerlegungseinheit (302) generiert wird.

18. System nach Anspruch 1, bei dem der Steuerbrennstoffstrom aus mindestens einem von einem Kohlendioxidzustromreservoir (304), einer Ölbohrung und einer Kohlenwasserstoffbrennstoffversorgungspipeline (306) generiert wird.

19. System nach Anspruch 1, bei dem der Kohlendioxidstrom zwischen 70 und 100 Prozent des Kohlendioxids aus dem gasförmigen Verbrennungsstrom umfasst.

20. System nach Anspruch 1, bei dem der Kohlendioxidstrom während des Hochfahrens des Oxyfuel-Gasturbinensystems vorwiegend aus einer ersten Quelle generiert wird, und der Kohlendioxidstrom während des fortgesetzten Betriebs des Oxyfuel-Gasturbinensystems vorwiegend aus einer zweiten Quelle generiert wird.

21. System nach Anspruch 20, bei dem die erste Quelle eine Ölbohrung ist und die zweite Quelle der gasförmige Verbrennungsstrom ist.

22. System nach Anspruch 1, bei dem der Dampfreformierer in Fluidverbindung mit einem Dampfgenerator (130) zur Wärmerückgewinnung ist und stromaufwärts von diesem angeordnet ist.

23. Verfahren zur Verwendung mit einem Oxyfuel-Gasturbinensystem, bei dem
ein Steuerbrennstoffstrom (112) unter Verwendung von Wärme, die aus dem Sammelraumabführstrom (404) extrahiert wurde, reformiert wird, um einen reformierten Steuerbrennstoffstrom (504) zu bilden, um Wasser und Methan in dem Steuerbrennstoffstrom zu dem reformierten Steuerbrennstoff zu reformieren, der Wasserstoff und Kohlenmonoxid umfasst;
ein Sauerstoffstrom (108), ein Kohlendioxidstrom (110) und der reformierte Steuerbrennstoffstrom bereitgestellt werden;
der Sauerstoffstrom, der Kohlendioxidstrom und der reformierte Steuerbrennstoffstrom verbrannt werden, um einen gasförmigen Verbrennungsstrom (122) zu produzieren, der im Wesentlichen Kohlendioxid und Wasser aufweist, wobei der gasförmige Verbrennungsstrom eine Temperatur von mindestens 982°C (1800°F) hat;
der gasförmige Verbrennungsstrom über eine Turbine (124) expandiert wird, um einen expandierten gasförmigen Verbrennungsstrom zu bilden; und
eine Verweilzeit in einem Sammelraum (402) zwischen 0,1 und 10 Sekunden für den expandierten gasförmigen Verbrennungsstrom bereitgestellt wird, während der mindestens 50 % einer einzelnen Komponente des expandierten gasförmigen Verbrennungsstroms chemisch in Richtung des chemischen Gleichgewichts reagieren und in ein Gleichgewichtsprodukt in dem Sammelraumabführstrom am Ausgang des Sammelraums umgewandelt werden, wobei der Sammelraum eine Mittellinienlänge (406) zwischen 10 und 30 Metern oder von mehr als 30 Metern hat.

24. Verfahren nach Anspruch 23, das ferner den Schritt umfasst, in dem aus dem Schritt des Expandierens des gasförmigen Verbrennungsstroms über eine Turbine Energie generiert wird.

25. Verfahren nach Anspruch 23, das ferner die Schritte umfasst, in denen:
Kohlendioxid aus dem gasförmigen Verbrennungsstrom extrahiert wird; und
das Kohlendioxid in einem tertiären Ölgewinnungsprozess angewendet wird.

26. Verfahren nach Anspruch 23, das ferner den Schritt des Komprimierens des Kohlendioxidstroms vor dem Verbrennungsschritt umfasst.

27. Verfahren nach Anspruch 23, das ferner den Schritt des Generierens von Energie unter Verwendung eines Dampfgenerators (130) mit Wärmerückgewinnung aus dem expandierten gasförmigen Verbrennungsstrom nach dem Schritt des Bereitstellens einer Verweilzeit umfasst.

## Revendications

1. Système de turbine à gaz à oxycombustion comprenant :
un courant d'oxygène (108) ;
un courant de dioxyde de carbone (110) ;
un courant de combustible de commande (112) ;
une unité de combustion (120) configurée pour recevoir le courant d'oxygène, le courant de dioxyde de carbone et un courant de combustible de commande reformé (504), et brûler le courant de combustible de commande reformé, le courant de dioxyde de carbone et le courant d'oxygène pour produire un courant gazeux de combustion (122) ayant sensiblement du dioxyde de carbone et de l'eau, où le courant gazeux de combustion a une température d'au moins 982°C (1800°F) ;
une turbine (124) configurée pour recevoir le courant gazeux de combustion, dilater le courant gazeux de combustion et évacuer le courant gazeux de combustion dilaté en tant que courant de refoulement de turbine (128), où le courant de refoulement de turbine a une température d'au moins 649°C (1200°F) ;
un plénum (402) en communication fluidique avec la turbine pour recevoir le courant de refoulement de turbine, où le plénum a une longueur de ligne médiane (406) comprise entre 10 et 30 mètres ou supérieure à 30 mètres et fournir un temps de séjour compris entre 0,1 et 10 seconde(s) au cours duquel au moins 50% d'un composant individuel du courant de refoulement de turbine réagit chimiquement vers un équilibre et est converti en un produit d'équilibre dans un courant d'évacuation de plénum (404) au niveau d'une sortie du plénum ; et
un reformeur à vapeur (502) en communication fluidique avec le plénum et configuré pour utiliser la chaleur provenant du courant d'évacuation de plénum pour reformer l'eau et le méthane dans le courant de combustible de commande en le combustible de commande reformé comprenant de l'hydrogène et du monoxyde de carbone.

2. Système de la revendication 1, dans lequel la turbine est configurée pour générer de l'énergie lorsque le courant gazeux de combustion est dilaté.

3. Système de la revendication 1, dans lequel au moins une partie du dioxyde de carbone provenant du courant gazeux de combustion est utilisée pour la Récupération Assistée du Pétrole.

4. Système de la revendication 1, dans lequel le composant individuel du courant de refoulement de turbine réagit chimiquement jusqu'à ce qu'au moins 75% du composant individuel soit converti en le produit d'équilibre au niveau d'une sortie du plénum.

5. Système de la revendication 4, dans lequel le composant individuel est l'oxygène, le monoxyde de carbone ou une espèce intermédiaire hydrocarbonée.

6. Système de la revendication 5, dans lequel l'espèce intermédiaire hydrocarbonée est un hydrocarbure non brûlé tel que le formaldéhyde.

7. Système de l'une quelconque des revendications 1 à 6, dans lequel le composant individuel du courant de refoulement de turbine réagit chimiquement jusqu'à ce qu'au moins 90% du composant individuel soit converti en un produit d'équilibre au niveau de la sortie du plénum.

8. Système de la revendication 1, dans lequel le composant individuel du courant de refoulement de turbine réagit chimiquement jusqu'à ce que le composant individuel puisse être utilisé avec un procédé de Récupération Assistée du Pétrole et le composant individuel est l'oxygène, et l'oxygène a une concentration inférieure ou égale à 10 parties par million ou le composant individuel est le monoxyde de carbone, et le monoxyde de carbone a une concentration inférieure ou égale à 1000 parties par million.

9. Système de la revendication 1, dans lequel la pression du courant gazeux de combustion est sensiblement comprise entre 12 et 18 bars avant qu'il ne soit soumis à l'action de la turbine.

10. Système de la revendication 1, dans lequel la température du courant gazeux de combustion est sensiblement comprise entre 1038 et 1482°C (1900 et 2700°F), de préférence entre 1204 et 1371°C (2200 et 2500°F) .

11. Système de la revendication 1, dans lequel le courant gazeux de combustion contient sensiblement entre 70 et 80% de dioxyde de carbone.

12. Système de la revendication 1, dans lequel la pression du courant de refoulement de turbine est sensiblement comprise entre 1 et 2 bar(s).

13. Système de la revendication 1, dans lequel la température du courant de refoulement de turbine est comprise entre 649 et 982°C (1200 et 1800°F), de préférence entre 732 et 927°C (1350 et 1700°F).

14. Système de la revendication 1, dans lequel le courant de dioxyde de carbone est comprimé dans un ou plusieurs compresseur(s) (118) avant d'être reçu par l'unité de combustion.

15. Système de la revendication 1, dans lequel le plénum est en communication fluidique avec un générateur de vapeur à récupération de chaleur (130) configuré pour générer de l'énergie.

16. Système de la revendication 1, dans lequel le plénum est directement couplé à la turbine.

17. Système de la revendication 1, dans lequel le courant d'oxygène est généré en utilisant une Colonne de Distillation d'Air (302).

18. Système de la revendication 1, dans lequel le courant de combustible de commande est généré à partir d'au moins l'un d'un réservoir d'injection de dioxyde de carbone (304), d'un puits de pétrole et d'un conduit d'alimentation en combustible hydrocarboné (306).

19. Système de la revendication 1, dans lequel le courant de dioxyde de carbone comprend entre 70 et 100% du dioxyde de carbone provenant du courant gazeux de combustion.

20. Système de la revendication 1, dans lequel le courant de dioxyde de carbone est généré principalement à partir d'une première source pendant le démarrage du système de turbine à gaz à oxycombustion et le courant de dioxyde de carbone est généré principalement à partir d'une deuxième source pendant le fonctionnement continu du système de turbine à gaz à oxycombustion.

21. Système de la revendication 20, dans lequel la première source est un puits de pétrole et la deuxième source est le courant gazeux de combustion.

22. Système de la revendication 1, dans lequel le reformeur à vapeur est en communication fluidique avec un générateur de vapeur à récupération de chaleur (130) et situé en amont de celui-ci.

23. Procédé destiné à être utilisé avec un système de turbine à gaz à oxycombustion, le procédé comprenant les étapes consistant :
à reformer un courant de combustible de commande (112) pour former un courant de combustible de commande reformé (504) en utilisant la chaleur extraite d'un courant d'évacuation de plénum (404) pour reformer l'eau et le méthane dans le courant de combustible de commande en le combustible de commande reformé comprenant de l'hydrogène et du monoxyde de carbone ;
à fournir un courant d'oxygène (108), un courant de dioxyde de carbone (110) et le courant de combustible de commande reformé ;
à brûler le courant d'oxygène, le courant de dioxyde de carbone et le courant de combustible de commande reformé pour produire un courant gazeux de combustion (122) ayant sensiblement du dioxyde de carbone et de l'eau, où le courant gazeux de combustion a une température d'au moins 982°C (1800°F) ;
à dilater le courant gazeux de combustion à travers une turbine (124) pour former un courant gazeux de combustion dilaté ; et
à fournir un temps de séjour dans un plénum (402) compris entre 0,1 et 10 seconde(s) pour le courant gazeux de combustion dilaté au cours duquel au moins 50% d'un composant individuel du courant gazeux de combustion dilaté réagit chimiquement vers un équilibre chimique et est converti en un produit d'équilibre dans le courant d'évacuation de plénum au niveau d'une sortie du plénum, où le plénum a une longueur de ligne médiane (406) comprise entre 10 et 30 mètres ou supérieure à 30 mètres.

24. Procédé de la revendication 23, comprenant en outre l'étape consistant à générer de l'énergie à partir de l'étape de dilatation du courant gazeux de combustion à travers une turbine.

25. Procédé de la revendication 23, comprenant en outre les étapes consistant :
à extraire le dioxyde de carbone du courant gazeux de combustion ; et
à appliquer le dioxyde de carbone dans un procédé de Récupération Assistée du Pétrole.

26. Procédé de la revendication 23, comprenant en outre l'étape consistant à comprimer le courant de dioxyde de carbone avant l'étape de combustion.

27. Procédé de la revendication 23, comprenant en outre l'étape consistant à générer de l'énergie, en utilisant un générateur de vapeur à récupération de chaleur (130), à partir du courant gazeux de combustion dilaté après l'étape de fourniture d'un temps de séjour.
